# EUROPÄISCHE PATENTSCHRIFT

(11) **EP 1 740 921 B1**
(45) Veröffentlichungstag und Bekanntmachung des Hinweises auf die Patenterteilung: **05.06.2013**
(21) Anmeldenummer: 05735970.5
(22) Anmeldetag: 19.04.2005
(51) Int. Cl.: G01M 17/007, F15B 21/12, G01M 13/00, G01N 3/36

(54) **HYDROPULSVORRICHTUNG**
SERVOHYDRAULIC DEVICE
DISPOSITIF HYDROPULSE

(30) Priorität: 30.04.2004 DE 102004021479
(43) Veröffentlichungstag der Anmeldung: 10.01.2007
(73) Patentinhaber: DEUTZ Aktiengesellschaft, 51149 Köln (DE)
(72) Erfinder: SICKMANN, Hans-Joachim, 58313 Herdecke (DE)
(86) Internationale Anmeldenummer: PCT/EP2005/004129
(87) Internationale Veröffentlichungsnummer: WO 2005/106421

(56) Entgegenhaltungen:
- EP-A- 0 747 687
- DE-A1- 3 924 462
- US-A- 3 916 768
- US-A- 4 375 766
- US-A- 5 945 593

## Beschreibung

Die Erfindung betrifft eine Hydropulsvorrichtung mit einer ein Hydraulikfluid fördernden Pumpe zur Prüfung und/oder Erprobung von im realen Betrieb wechselnden Belastungen unterliegenden Komponenten sowie ein entsprechendes Verfahren.

Eine solche Hydropulsvorrichtung wird beispielsweise zur Prüfung und/oder Erprobung von Fahrzeugen eingesetzt. Dabei weist die Hydropulsvorrichtung entsprechend der Räderzahl des Fahrzeugs Hydraulikzylinder auf, die jeweils einzeln steuerbar von einer Pumpe mit Hydraulikflüssigkeit versorgt werden. Die Hydraulikzylinder wirken auf die Radaufhängungen des Fahrzeugs ein. Somit kann ein realer Fahrbetrieb des Fahrzeugs an einem Prüfstand simuliert werden und es können beispielsweise Untersuchungen zur Verwindungssteifigkeit der Karosserie durchgeführt werden.

EP 0 747 687 offenbart solch eine Vorrichtung.

Der Erfindung liegt die Aufgabe zugrunde, eine Hydropulsvorrichtung bereitzustellen und ein Verfahren anzugeben, die/das zur Untersuchung von Komponenten, insbesondere Bauteilen einer Brennkraftmaschine, geeignet ist.

Diese Aufgabe wird dadurch gelöst, dass das von der Pumpe aus einem Tank geförderte Hydraulikfluid einer Steuereinrichtung zur Erzeugung eines einstellbaren Systemdrucks zugeführt wird, von der das Hydraulikfluid über eine Verteileinrichtung zu der Komponente weitergeleitet wird, und dass die Komponente direkt von dem Hydraulikfluid druckbeaufschlagt wird. Die Bereitstellung eines einstellbaren Systemdrucks ermöglicht das Eingehen auf unterschiedliche Anforderungsprofile bezüglich der Druckbeaufschlagung bei der Prüfung beziehungsweise Erprobung. Der Systemdruck soll zudem konstant beziehungsweise geglättet sein, um das Gesamtsystem zumindest bis zu der Verteileinrichtung vor bei dem Druckaufbau entstehenden Druckspitzen zu schützen. Die Glättung kann beispielsweise mit Druckspeicherblasen erreicht werden. In das Gesamtsystem sind weiterhin Komponenten zur Drucküberwachung, Temperaturüberwachung, zur Reinigung des Hydraulikfluids (Filtereinheiten) und zur Kühlung eingeschaltet. Die Verteileinrichtung kann so ausgebildet sein, dass eine parallele oder aufeinanderfolgende Druckbeaufschlagung von den Komponenten möglich ist. Das entsprechende Verfahren sieht die Anwendung an den Zylindereinheiten einer Brennkraftmaschine vor, indem die Brennräume der Zylindereinheiten mit von der Hydropulsvorrichtung erzeugtem und verteiltem Hydraulikfluid direkt druckbeaufschlagt werden. Selbstverständlich können im Rahmen der Erfindung auch alle anderen Komponenten einer Brennkraftmaschine, beispielsweise Wärmetauscher, und auch Komponenten anderer Gegenstände mit der erfindungsgemäßen Vorrichtung erprobt werden.

In Weiterbildung der Erfindung ist die Steuereinrichtung ein magnetventilgesteuertes Absteuerventil. Dabei ist in die Steuereinrichtung eine Überwachungseinrichtung eingefügt, die den Systemdruck überwacht und bei einer unzulässigen Veränderung eine Notabschaltung des Systems bewirkt. Von der Pumpe wird beispielsweise ein Primärdruck von 300 bar erzeugt, der von dem Absteuerventil, beispielsweise im Bereich von 5 bar bis 300 bar, regelbar ist.

Das Hydraulikfluid wird dann mit dem entsprechend eingestellten Systemdruck von der Verteileinrichtung, die in weiterer Ausgestaltung ein Drehkolbenverteiler ist, der wiederum in weiterer Ausgestaltung elektrisch angetrieben und aus hydraulischen Gründen drehzahlregelbar ist, direkt den Komponenten zugeführt. Der Drehkolbenverteiler weist mehrere Ausgänge zum Anschluss von Druckleitungen auf, wobei die Anzahl der Ausgänge zumindest der Anzahl der maximal zu prüfenden Komponenten entspricht. Bei einer sechszylindrigen Brennkraftmaschine mit zu prüfenden Zylindereinheiten sind also mindestens sechs Ausgänge vorhanden. Vorzugsweise weist der Drehkolbenverteiler aber weitere Ausgänge auf, die bei Nichtgebrauch verschlossen werden. Die Ausgänge sind so im Bezug zu dem Drehkolben angeordnet, dass entsprechend der Drehbewegung des Drehkolbens nacheinander Hydraulikfluid in die Ausgänge geleitet wird. Durch die entsprechende Zuordnung der Druckleitungen zu den Zylindereinheiten können diese entsprechend der normalen Zündfolge druckbeaufschlagt werden.

In Weiterbildung der Erfindung sind in jede Druckleitung ein Regelventil und ein Druckaufnehmer zur Druckermittlung und Drucküberwachung eingeschaltet. Wenn die zu prüfenden Komponenten - wie ausgeführt - beispielsweise die Zylindereinheiten der Brennkraftmaschine mit dem Kurbelgehäuse, den Kolben, den Pleueln und dem Zylinderkopf sind, können mit dem Regelventil sich bei der Prüfung ergebende Druckabweichungen in den einzelnen Zylindereinheiten ausgeglichen werden. Diese Druckabweichungen können beispielsweise durch ein unterschiedliches Dichtverhalten der Kolben mit den entsprechenden Kolbenringen verursacht sein. Der Prüfdruck entspricht insbesondere dem Zünddruck, der im realen Betrieb bei der Zündung des Kraftstoffs bzw. des Kraftstoff-Luft-Gemischs auftritt. Da die Zündung beim realen Betrieb der Brennkraftmaschine im Bereich des Zünd-OTs erfolgt, werden alle Kolben der zu untersuchenden Brennkraftmaschine in der OT-Stellung montiert. Diese Montage kann derart erfolgen, dass spezielle Kurbelwellen oder Kurbelwellenabschnitte verwendet werden, die eine Kröpfung aufweisen, die alle Kolben einer Brennkraftmaschine in der OT-Stellung halten. Bevorzugt werden aber Kurbelwellenabschnitte für den Versuch verwendet, die keine Kröpfungen aufweisen. Der erforderliche Längenausgleich zur Positionierung des Kolbens in der OT-Stellung erfolgt entweder durch längere Pleuel oder wiederum bevorzugt durch entsprechend ausgebildete Kolben, bei denen beispielsweise das Bolzenauge entsprechend versetzt ist. Diese Ausbildung hat den Vorteil, dass die auch im realen Betrieb verbauten Pleuel geprüft werden können und durch den Einsatz der Kurbelwellenabschnitte auch die unterschiedlichen Belastungen der Kurbelwellenhauptlager ermittelt werden können.

Erfindungsgemäß wird das Hydraulikfluid über eine Einspritzdüsenöffnung und/oder eine Zünderkerzenöffnung in dem Zylinderkopf in den Brennraum der Zylindereinheit eingeführt. An dem Zylinderkopf brauchen daher keine zusätzlichen Öffnungen angebracht werden und es kann gleichzeitig der entsprechend modifizierte Einspritzventilhalter mitsamt der Befestigung (oder entsprechend die modifizierte Zünderkerze) geprüft werden. Der Druckaufnehmer ist an dem modifizierten Einspritzverstellhalter, beispielsweise in Form einer DMS-Messeinrichtung, angebracht. Die Druckmessung erfolgt somit nahe am Brennraum und Vergleiche mit im Brennraum aufgenommenen, tatsächlichen Verbrennungsvorgängen sind möglich.

Erprobt wird mit dieser Hydropulsvorrichtung die Haltbarkeit, insbesondere die Dauerhaltbarkeit der einzelnen Teile, also Kurbelgehäuse, Zylinderkopf, Pleuel usw. der Brennkraftmaschine. Genauso können die im realen Betrieb der Brennkraftmaschine auftretenden Belastungen der Brennkraftmaschine an beliebigen Stellen, beispielsweise durch Drucksensoren, ermittelt werden. Ein besonderer Vorteil dieser Hydropulsvorrichtung ist es, dass auch mit höheren Drücken als den auftretenden Zünddrücken geprüft werden kann. Damit kann das Prüfverfahren verkürzt werden oder aber extreme Belastungen der Brennkraftmaschine simuliert werden. Die Prüfungen beispielsweise zur Dauerhaltbarkeit werden vorzugsweise immer nach gleichen Ablaufvorgaben durchgeführt. Dies ermöglicht eine mit anderen Prüfungen vergleichbare Auswertung der EDV-mäßig erfassten Prüfergebnisse. Ein spezielles Auswerteprogramm ermöglicht die Erstellung einer Wöhler-Kurve, die so angelegt ist, dass eine Dauerhaltbarkeit auf Basis einer 50 % Überlebenswahrscheinlichkeit als Ergebnis anfällt. Weitere statistische Auswertemethoden erlauben eine Aussage über die Haltbarkeitsstreuung der geprüften Komponenten.

## Patentansprüche

1. Verfahren zur Prüfung und/oder Erprobung von im realen Betrieb wechselnden Belastungen unterliegenden Zylindereinheiten einer Brennkraftmaschine, wobei Brennräume der Zylindereinheiten mit dem von einer Hydropulsvorrichtung erzeugten und verteilten Hydraulikfluid direkt druckbeaufschlagt werden, wobei die Hydropulsvorrichtung eine das Hydraulikfluid fördernde Pumpe aufweist, wobei das Hydraulikfluid einer Steuereinrichtung zur Erzeugung eines einstellbaren Systemdrucks zugeführt wird, von der das Hydraulikfluid über eine Verteileinrichtung zu jedem Brennraum weitergeleitet wird, und wobei der Brennraum direkt von dem Hydraulikfluid druckbeaufschlagt wird, und wobei
das Hydraulikfluid über eine Einspritzdüsenöffnung über einen Einspritzventilhalter in dem Zylinderkopf in den Brennraum eingeführt wird **dadurch gekennzeichnet, daß** der Einspritzventilhalter derart modifiziert ist daß ein Druckaufnehmer angebracht ist.

2. Verfahren nach Anspruch 1,
***dadurch gekennzeichnet,* dass** der Kolben in die OT-Stellung ausgerichtet ist.

3. Hydropulsvorrichtung zur Durchführung des Verfahrnes nach nach Anspruch 1 oder 2,
***dadurch gekennzeichnet,* dass** die Steuereinrichtung ein Absteuerventil mit integrierter Notabschaltvorrichtung ist.

4. Hydropulsvorrichtung nach Anspruch 3,
***dadurch gekennzeichnet,* dass** die Verteileinrichtung ein Drehkolbenverteiler ist.

5. Hydropulsvorrichtung nach Anspruch 4,
***dadurch gekennzeichnet,* dass** der Drehkolbenverteiler elektrisch angetrieben ist.

6. Hydropulsvorrichtung nach einem der Ansprüche 4 oder 5,
***dadurch gekennzeichnet,* dass** der Drehkolbenverteiler zwei bis zwölf, vorzugsweise vier bis acht Ausgänge zum Anschluss von Druckleitungen aufweist.

7. Hydropulsvorrichtung nach einem der Ansprüche 5 oder 6,
***dadurch gekennzeichnet,* dass** in jede Druckleitung ein Druckaufnehmer eingeschaltet ist.

## Claims

1. Method for checking and/or testing cylinder units of an internal combustion engine which are subject to loads which change during real operation, wherein pressure is applied directly to combustion chambers of the cylinder units by means of the hydraulic fluid which is generated and distributed by a hydropulse device, wherein the hydropulse device has a pump which delivers the hydraulic fluid, wherein the hydraulic fluid is fed to a control device for generating an adjustable system pressure, from which control device the hydraulic fluid is passed on to each combustion chamber via a distribution device, and wherein pressure is applied directly to the combustion chamber by the hydraulic fluid, and wherein
the hydraulic fluid is introduced into the combustion chamber via an injection nozzle opening by means of an injection valve holder in the cylinder head, ***characterized* in that** the injection valve holder is modified in such a way that a pressure pickup is attached.

2. Method according to Claim 1,
***characterized* in that** the piston is oriented in the top dead centre position.

3. Hydropulse device for carrying out the method according to Claim 1 or 2,
***characterized* in that** the control device is a cut-off valve with an integrated emergency switch-off device.

4. Hydropulse device according to Claim 3,
***characterized* in that** the distribution device is a rotary piston distributor.

5. Hydropulse device according to Claim 4,
***characterized* in that** the rotary piston distributor is driven electrically.

6. Hydropulse device according to one of Claims 4 or 5,
***characterized* in that** the rotary piston distributor has two to twelve, preferably four to eight, outputs for connecting pressure lines.

7. Hydropulse device according to one of Claims 5 or *6,* ***characterized* in that** a pressure pickup is connected into each pressure line.

## Revendications

1. Procédé pour contrôler et/ou tester des unités de cylindre d'un moteur à combustion interne soumises à des contraintes variables en fonctionnement réel, des chambres de combustion des unités de cylindre étant directement sollicitées en pression par le fluide hydraulique distribué et produit par un dispositif hydropulsé, le dispositif hydropulsé présentant une pompe refoulant le fluide hydraulique, le fluide hydraulique étant acheminé à un dispositif de commande pour produire une pression de système ajustable, depuis lequel dispositif de commande le fluide hydraulique est conduit par le biais d'un dispositif de distribution à chaque chambre de combustion, et la chambre de combustion étant sollicitée en pression directement par le fluide hydraulique, et le fluide hydraulique étant introduit dans la chambre de combustion par le biais d'une ouverture de buse d'injection par le biais d'un dispositif de retenue de soupape d'injection dans la culasse, **caractérisé en ce que** le dispositif de retenue de soupape d'injection est modifié de telle sorte qu'un dispositif de réception de la pression soit monté sur celui-ci.

2. Procédé selon la revendication 1,
**caractérisé en ce que** le piston est orienté dans la position de point mort haut.

3. Dispositif hydropulsé pour mettre en oeuvre le procédé selon la revendication 1 ou 2,
**caractérisé en ce que** le dispositif de commande est une soupape de coupure avec un dispositif de coupure d'urgence intégré.

4. Dispositif hydropulsé selon la revendication 3,
**caractérisé en ce que** le dispositif de distribution est un distributeur à piston rotatif.

5. Dispositif hydropulsé selon la revendication 4,
**caractérisé en ce que** le distributeur à piston rotatif est entraîné électriquement.

6. Dispositif hydropulsé selon l'une quelconque des revendications 4 ou 5,
**caractérisé en ce que** le distributeur à piston rotatif présente de deux à douze, de préférence de quatre à huit sorties pour le raccordement de conduites de pression.

7. Dispositif hydropulsé selon l'une quelconque des revendications 5 ou 6,
**caractérisé en ce que** dans chaque conduite de pression est incorporé un dispositif de réception de la pression.
